# EUROPEAN PATENT SPECIFICATION

(11) **EP 4 352 922 B1**
(45) Date of publication and mention of the grant of the patent: **03.09.2025**
(21) Application number: 22735089.9
(22) Date of filing: 08.06.2022
(51) Int. Cl.: H04L 12/14, H04M 15/00, H04W 76/10, H04L 65/1069, H04L 69/18

(54) **SYSTEM AND METHOD FOR ESTABLISHING A DUAL-LAYER PDU SESSION**
SYSTEM UND VERFAHREN ZUM AUFBAU EINER ZWEISCHICHTIGEN PDU-SITZUNG
SYSTÈME ET PROCÉDÉ D'ÉTABLISSEMENT D'UNE SESSION DE PDU DOUBLE COUCHE

(30) Priority: 08.06.2021 EP 21178154
(43) Date of publication of application: 17.04.2024
(73) Proprietor: Koninklijke KPN N.V., 3072 AP Rotterdam (NL); Nederlandse Organisatie voor toegepast-natuurwetenschappelijk Onderzoek TNO, 2595 DA 's-Gravenhage (NL)
(72) Inventor: DIMITROVSKI, Toni, 2771 PS Boskoop (NL); ALMODÓVAR CHICO, José Luis, 2513 TD The Hague (NL)
(74) Representative: De Vries & Metman
(86) International application number: PCT/EP2022/065459
(87) International publication number: WO 2022/258642

(56) References cited:
- EP-A1- 3 468 236
- CN-A- 103 546 984
- "3rd Generation Partnership Project; Technical Specification Group Services and System Aspects; Policy and charging control framework for the 5G System (5GS); Stage 2 (Release 17)", vol. SA WG2, no. V17.0.0, 31 March 2021 (2021-03-31), pages 1 - 128, XP052000254, Retrieved from the Internet <URL:https://ftp.3gpp.org/Specs/archive/23_series/23.503/23503-h00.zip 23503-h00.docx> [retrieved on 20210331]
- "3rd Generation Partnership Project; Technical Specification Group Services and System Aspects; Study on the Wireless and Wireline Convergence for the 5G system architecture (Release 16)", 3GPP STANDARD; TECHNICAL REPORT; 3GPP TR 23.716, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.0.0, 19 December 2018 (2018-12-19), pages 1 - 184, XP051591215
- ANONYMOUS: "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.4.0, 18 December 2018 (2018-12-18), pages 1 - 236, XP051591141
- NOKIA ET AL: "Suppport of bridge RG: impacts to the Ethernet PDU Session type", vol. SA WG2, no. Reno, Nevada, USA; 20190513 - 20190517, 17 May 2019 (2019-05-17), XP051736209, Retrieved from the Internet <URL:http://www.3gpp.org/ftp/Meetings%5F3GPP%5FSYNC/SA2/Docs/S2%2D1906282%2Ezip> [retrieved on 20190517]

## Description

### TECHNICAL FIELD

The present disclosure relates to a session management system, a user plane system and a user device for establishing a dual-layer protocol data unit, PDU, session. In particular, the present disclosure relates to such systems in a telecommunications network, such as a 5G telecommunications network, to which a user device connects over a first communication layer, such as Ethernet, for a PDU session.

### BACKGROUND

User equipment, UEs, such as mobile user devices (e.g. smart phones, computers) have been standardized to request establishment of a protocol data unit, PDU, session to a session management system capable of running a session management function (SMF) for a user equipment to obtain a PDU session over a user plane system performing a user plane function (UPF) in a 5G core (5GC) network. The request for establishment of the PDU session indicates, amongst other things, the type of the PDU session, such as an Ethernet-type PDU session or an IP-type PDU session. The user plane system comprises one or more entities performing one or more user plane functions by processing and forwarding PDUs over the user plane system configured for the indicated type of session. The session management system provides forwarding rules for the type of session to the user plane system to direct the PDUs of that session over the 5GC.

Home devices are usually connected to the internet via a device referred to as gateway device or residential gateway device, such as the 5G residential gateway (5G-RG). The gateway device provides a local network and assigns IP addresses to devices in the local network. The gateway device also routes data traffic in and out of the local network. The gateway device may contain a wireless access part, using e.g. WiFi access technology. Such 5G-RGs may register as a user device with the 5GC network and act as a gateway for PDUs by requesting establishment of a PDU session to the session management system. The UEs behind the 5G-RG can have a connection to a data network via the 5G-RG without needing to register to the 5GC. In this manner, the devices behind the 5G-RG can have a connection to a Data Network (DN) via the 5G-RG without being registered in the 5GC. 3GPP TS 23.316 v16.5.0 specifies such a network arrangement.

The Network Enhanced Residential Gateway (NERG) is an upgrade to the existing residential gateway, where a part of the functionality of the gateway is virtualized and placed in the telecommunications network. With NERG, the on-premises user device consists of a Bridged Residential Gateway (BRG) connected over a logical subscriber link (LSL) to a virtual gateway deployed in the telecommunications network as a point-of-presence (PoP) operator device. By deploying gateway functionality in the network, management, maintenance and troubleshooting operations are facilitated for the operator.

The NERG upgrade is not feasible with a 5G-RG user device that registers itself as a UE in the 5GC, because the BRG only has an Ethernet connection to the virtual gateway in the telecommunications network while the BRG should also allow internet or other Data Network (DN) access for UEs behind the BRG, so that at some point IP layer communication should be provided. Another problem is that when the virtual gateway is arranged more centrally in the telecommunications network, very large broadcast domains are created because of the Ethernet connection.

"3rd Generation Partnership Project; Technical Specification Group Services and System Aspects; Study on the Wireless and Wireline Convergence for the 5G system architecture (Release 16)", 3GPP Standard, Technical Report; 3GPP TR 23.716, 3RD GENERATION PARTNERSHIP PROJECT (3GPP), Mobile Competence Centre; 650, Route des Lucioles ; F-06921 Sophia-Antipolis Cedex ; France, vol. SA WG2, no. V16.0.0, 19 December 2018 (2018-12-19), pages 1-184, XP051591215, in clause 6.10 describes a solution for an Ethernet and IP service for 5G-RG and FN-RG UEs.

"3rd Generation Partnership Project; Technical Specification Group Services and System Aspects; System Architecture for the 5G System; Stage 2 (Release 15)", 3GPP Standard, Technical Specification; 3GPP TS 23.501, 3RD GENERATION PARTNERSHIP PROJECT (3GPP), Mobile Competence Centre; 650, Route des Lucioles ; F-06921 Sophia-Antipolis Cedex ; France, vol. SA WG2, no. V15.4.0, 18 December 2018 (2018-12-18), pages 1-236, XP051591141, in clause 6.10 discloses in clause 5.8.2.4 the detection process at the UPF that identifies the packets belonging to a session, or a service data flow, and in clause 6.3.3.3 the selection of an UPF for a particular PDU session.

### SUMMARY

The invention is defined by the subject-matter of the appended set of claims.

The inventors have realized that the present situation is too restrictive. At present, a device requests a protocol data unit, PDU, session suitable for the connection that the device has to the network. A device having an Ethernet connection to the network requests an Ethernet-type PDU session from the network which results, amongst other things, in the establishment of Ethernet forwarding rules in the network. Likewise, a device having an IP connection to the network requests an IP-type PDU session which triggers the deployment of IP forwarding rules in the network. The present disclosure provides for a more flexible approach.

To that end, one aspect of the disclosure pertains to a session management system according to claim 1 for use in a telecommunications network. The telecommunications network also comprises a user plane system for forwarding data for a PDU session. The user plane system has a protocol stack with a first communication layer for a first communication protocol (e.g. Ethernet) and a second communication layer for a second communication protocol (e.g. Internet Protocol, IP). The first communication layer exists below the second communication layer in the protocol stack.

The session management system is configured for receiving a protocol data unit, PDU, session establishment request, from a user device. The PDU session establishment request contains a dual-layer session type indication, e.g. in a session type field of the PDU session establishment request. The session management system is configured to initiate establishment of the PDU session for the user plane system.

The session management system provides one or more first forwarding rules for the first communication layer to the user plane system.

The session management system also provides one or more second forwarding rules for the second communication layer to the user plane system.

Another aspect of the disclosure relates to a user plane system according to claim 8 for use in a telecommunications network for forwarding data for a protocol data unit, PDU, session. The user plane system has a protocol stack with a first communication layer for a first communication protocol (e.g. Ethernet) and a second communication layer for a second communication protocol (e.g. IP). The first communication layer exists below the second communication layer in the protocol stack. The user plane system is configured to receive one or more first forwarding rules for the first communication layer and one or more second forwarding rules for second communication layer. The user plane system is also configured to apply the one or more first forwarding rules and one or more second forwarding rules for the PDU session.

Yet another aspect of the disclosure involves a user device according to claim 13 configured to establish a protocol data unit, PDU, session with a telecommunications network comprising a session management system and a user plane system for forwarding data for the PDU session. The user plane system has a protocol stack with a first communication layer for a first communication protocol (e.g. Ethernet) and a second communication layer for a second communication protocol (e.g. IP). The first communication layer exists below the second communication layer in the protocol stack.

The user device is configured to transmit a PDU session establishment request containing a dual-layer session type indication to the session management system to trigger the session management system to establish a dual layer PDU session in the user plane system.

In one embodiment, the user device has a protocol stack up to the first communication layer (e.g. Ethernet, meaning that the user device is an Ethernet-connection enabled device) for communicating with the user plane system, wherein, optionally the user device is a bridged residential gateway configured to communicate with a virtual gateway executable in the user plane system.

An unclaimed example relates to a protocol data unit, PDU, session establishment request for transmission to a session management system in a telecommunications network, wherein the PDU session establishment request contains a field, e.g. the PDU session type field, containing a dual-layer session type indication for triggering a dual-layer PDU session in the telecommunications network.

Another unclaimed example of the present disclosure involves a method in a telecommunications network comprising a session management system and a user plane system for forwarding data for a PDU session. The user plane system has a protocol stack with a first communication layer for a first communication protocol (e.g. Ethernet) and a second communication layer for a second communication protocol (e.g. Internet Protocol, IP). The first communication layer exists below the second communication layer in the protocol stack. The method involves one or more of the following steps by the session management system. The method involves a step of receiving a PDU session establishment request, from a user device. The PDU session establishment request contains a dual-layer session type indication, e.g. in a session type field of the PDU session establishment request. The method involves a step of initiating establishment of the PDU session for the user plane system in response to receiving the PDU session establishment request with the dual-layer session type indication. The method involves providing one or more first forwarding rules for the first communication layer to the user plane system. The method involves providing one or more second forwarding rules for the second communication layer to the user plane system.

Another unclaimed example of the present disclosure involves a method in a telecommunications network comprising a session management system and a user plane system for forwarding data for a PDU session. The user plane system has a protocol stack with a first communication layer for a first communication protocol (e.g. Ethernet) and a second communication layer for a second communication protocol (e.g. Internet Protocol, IP). The first communication layer exists below the second communication layer in the protocol stack. The method involves one or more of the following steps by the user plane system. The method involves the step of receiving of one or more first forwarding rules for the first communication layer and one or more second forwarding rules for second communication layer. The method also involves the step of applying the one or more first forwarding rules and one or more second forwarding rules for the PDU session for the user plane system.

Yet another unclaimed example of the disclosure involves a method in a user device comprising the step of transmitting a PDU session establishment request containing a dual-type session indication to a session management system of a telecommunications network to trigger the session management system to establish a dual-layer PDU session in a user plane system of the telecommunications network. In one example, the method involves the step of transmitting the PDU session establishment request with the dual-layer session type indication from a user device having a protocol stack up to the first communication layer (e.g. Ethernet) for communicating with the user plane system, wherein, optionally the user device is a bridged residential gateway configured to communicate with a virtual gateway executable in the user plane system.

The present disclosure also pertains to computer program products comprising software code portions configured, when run on a computer system, to execute the above-described method(s) or parts thereof.

It should be appreciated that the first communication layer and second communication layer of the protocol layer stack may involve a first communication layer and a second communication layer above a physical layer. The first communication layer may be designated as a lower layer and the second communication layer may be designated as an upper layer. In one embodiment, the first communication layer may be designated as "layer 2" or data link layer,. The second communication layer may be a layer directly above the first communication layer and is sometimes designated as "layer 3" or network layer. Whereas the present disclosure primarily focusses on a data link layer for a data link communication protocol such as Ethernet, ATM, or MPLS, and a network communication layer for a network communication protocol such as IP, GRE, IPSec, or even NDN (for Information Centric Networking), it should be noted that other layers and corresponding protocols have also been envisaged, such as transport layer with protocols like TCP, UDP, or SCTP.

The present disclosure provides for a more flexible approach to configure the telecommunications network with forwarding rules for different communication layers from the user device, when such a dual-layer configuration is desired. Such a configuration allows for more granular PDU forwarding, meaning certain PDUs can be forwarded differently depending on the PDU characteristics on both the lower layer (usually meaning its characteristics on a local network) and the upper layer (usually meaning its characteristics on a global scale, like the Internet) so that control can be exercised on both the local network and a wide area network in a unified manner.

The user plane system comprises at least a first entity and a second entity configured for executing a first user plane function and a second user plane function. The first entity is configured for PDU forwarding based on one or more PDU fields associated with the first communication protocol. The second entity is configured for PDU forwarding based on one or more PDU fields associated with the second communication protocol. Examples of PDU fields are PDU header fields depending on the type of communication protocol, such as IP TOS (type-of-service) fields and Ethernet VLAN fields. The session management system is configured to provide the one or more first forwarding rules to the first entity to apply the one or more first forwarding rules when performing the first user plane function. In addition, the session management system is configured to provide the one or more second forwarding rules to the second entity to apply the one or more second forwarding rules when performing the second user plane function.

The user plane system comprises at least a first entity configured for executing a first user plane function and a second entity configured for executing a second user plane function. The first entity is configured for PDU forwarding based on one or more PDU fields associated with the first communication protocol. The second entity is configured for PDU forwarding based on one or more PDU fields associated with the second communication protocol. The first entity is configured to receive and apply the one or more first forwarding rules when executing the first user plane function and the second entity is configured to receive and apply the one or more second forwarding rules when executing the second user plane for the PDU session.

The session management system and user plane system facilitate providing forwarding rules for different communication layers to different entities in the user plane system for a PDU session triggered by a single PDU session establishment request from a user device. For example, the forwarding rules in the first entity enable to branch out traffic on the first communication layer, while forwarding other traffic to the second entity where forwarding is done on the basis of the second forwarding rules (e.g. for internet traffic).

For the use case of a BRG/NERG, the BRG may transmit the PDU session request with the dual-layer session type indication to the session management system and the session management system may configure the first entity so that the first communication layer domain extends from the local network of the BRG to the first entity to support certain services, whereas other data can be forwarded to the second entity to support other services. Effectively, the BRG may act as a 5G-RG and the virtual gateway is split in two parts.

In one embodiment, the session management system is configured to select the first entity and the second entity on the basis of at least one of the following:
- geographic location of the first entity and/or the second entity;
- type of services for the first entity and/or the second entity;
- current load of the first entity and/or the second entity;
- the forwarding layer capability of the first entity and/or the second entity; and
- a Data Network Access Identifier (DNAI).

Likewise, in one embodiment, in the user plane system, the first entity may be located geographically closer to the user device than the second entity of the user plane system.

By selecting a first entity close to the user device, a restricted broadcast domain on the first communication layer is obtained, since the forwarding rules in the first entity can be used to restrict the broadcast domain.

In one embodiment, the first entity in the telecommunications network may be configured to provide access to services reachable using the first communication protocol for the user device and/or the second entity in the telecommunications network may be configured to provide access to services reachable using the second communication protocol for the user device. The embodiment facilitates using local services (like, for example, smart home services) and more central services (like, for example, internet access) to be provided from the telecommunications network in a unified manner without the necessity for two connections (Ethernet and IP) and controllers.

In one embodiment, the one or more first forwarding rules may include at least one Ethernet-based forwarding rule and/or the one or more second forwarding rules may include at least one IP-based forwarding rule. The combination of Ethernet communication layer protocol and IP communication layer protocol is found, e.g., when connecting to a local network (possibly extended into the telecommunications network, such as for the NERG use case) like a LAN using Ethernet to an IP based network, such as the internet.

In one embodiment, the first forwarding rules may include a rule for forwarding an address assignment request to the session management system or to the second entity. Such a forwarding rule may be applied to control address assignment for UEs behind the user device so that the addresses are eventually assigned under the control of the session management system. The session management system may ensure that address ranges in the local network match address ranges applied by the second entity in the user plane system towards the data network.

In one embodiment, the session management system may be configured to send, in response to receiving the dual-layer session type indication, a request for policy control rules to a policy control system in the telecommunications network. The session management system may derive both the one or more first forwarding rules and one or more second forwarding rules for the user plane system from the received policy control rules.

The embodiment facilitates not having to configure the first forwarding rules and second forwarding rules in the session management system. In one embodiment, the request to the policy control system contains the dual-layer session type indication in order to signal to the policy control system that information is requested for dual-layer forwarding rules.

In one embodiment, the session management system may be configured to provide both the one or more first forwarding rules and the one or more second forwarding rules and/or a combination of the first forwarding rules and second forwarding rules to an entity having both the first communication layer and the second communication layer.

In one embodiment, the user plane system may comprise an entity having both the first communication layer and the second communication layer, wherein the entity is configured to receive and apply both the one or more first forwarding rules and the one or more second forwarding rules and/or a combination of the first forwarding rules and second forwarding rules.

To increase the forwarding flexibility, an entity of the user plane system may have both first layer and second layer forwarding capabilities. The embodiment enables configuring the entity with both first layer and second layer forwarding rules from the session management system.

In one embodiment, the one or more first forwarding rules and the second forwarding rules from the session management system may comprise at least one of:
- a forwarding rule for an entity of the user plane system having both the first communication layer and the second communication layer, requiring analyzing a first header of a PDU of the first communication protocol and a second header of a PDU of second communication protocol and, after analyzing the first and second headers, forwarding the PDU dependent on an analyzing result;
- forwarding rules comprising a first forwarding rule requiring analyzing a header of a PDU of the first communication protocol and, after analyzing the header, forwarding the PDU, dependent on a first analyzing result, for execution of a second forwarding rule requiring analyzing a header of a PDU of the second communication protocol and forwarding the PDU , dependent on a second analyzing result;

In one embodiment, the user plane system may be configured to apply the forwarding rules based on at least one of:
- a forwarding rule for an entity of the user plane system having both the first communication layer and the second communication layer, requiring analyzing a first header of a PDU of the first communication protocol and a second header of a PDU of second communication protocol and, after analyzing the first and second headers, forwarding the PDU dependent on an analyzing result;
- forwarding rules comprising a first forwarding rule requiring analyzing a header of a PDU of the first communication protocol and, after analyzing the header, forwarding the PDU, dependent on a first analyzing result, for execution of a second forwarding rule requiring analyzing a header of a PDU of the second communication protocol and forwarding the PDU, dependent on a second analyzing result;

A forwarding rule may comprise one or more matching rules followed by an action (forwarding) to be performed dependent on whether the matching rules are met for a PDU.

The present embodiments both enable dual-layer forwarding rules.

The embodiments with an entity of the user plane system having both the first and second communication layer may have a single forwarding rule with matching rules for headers of PDUs of both the first and second communication protocol, i.e. cross-layer rules. Such cross-layer rules require analyzing of both one or more header fields of a PDU of the first communication protocol (e.g. a MAC address field of an Ethernet frame) and the second communication protocol (e.g. an IP address of an IP packet in the Ethernet frame). After analyzing both matching rules, the PDU may be forwarded to a particular destination in, for example, the local network or the central network.

Other embodiments, wherein the user plane system comprise one or more entities may apply chained forwarding rules wherein matching rules are sequentially analyzed and forwarding is done based on each individual matching result. For example, a field of an Ethernet frame may indicate that the Ethernet frame carries an IP packet. The forwarding rule may indicate that for such a match, forwarding is to another forwarding instance executing a further forwarding rule. The other forwarding instance may be executed in the same UPF entity or in a further, downstream, UPF entity. The further forwarding rule may comprise analyzing the header of the IP packet, for example analyzing a destination IP address field and/or a IP content field (e.g. IGMP). After analyzing the IP packet, forwarding may be to a central network.

It should be noted that first and second forwarding rules may be provided to entities of the user plane system dependent on the communication layers for these entities.

In one embodiment, the session management system may be configured to provide, in use, the one or more first forwarding rules to an entity having or only having the first communication layer;

In one embodiment, the session management system may be configured to provide, in use, both the one or more first forwarding rules and the one or more second forwarding rules to an entity having at least both the first and the second communication layer.

In one embodiment, the session management system may be configured to provide, in use, the one or more second forwarding rules to an entity having the second communication layer.

It should be noted that these embodiments may be combined and that the telecommunication network may comprise further user plane function entities with communication layers and obtained corresponding forwarding rules when in use.

In one embodiment, the user plane system may comprise an entity having a first communication layer wherein the first entity is configured, when in use, to receive and apply the one or more first forwarding rules.

In one embodiment, the user plane system may comprise an entity having at least a first communication layer and a second communication layer, wherein the entity is configured, when in use, to receive and apply both the one or more first forwarding rules and the one or more second forwarding rules and/or a combination of the first forwarding rules and second forwarding rules.

In one embodiment, the user plane system may comprise an entity having the second communication layer, wherein the entity is configured, when in use, to receive and apply the one or more second forwarding rules.

It should be noted that these embodiments may be combined and that the telecommunication network may comprise further user plane function entities with communication layers and obtained corresponding forwarding rules when in use.

These embodiments allow for further flexibility in operator deployments where the local networks may have communication capabilities in either one or both communication layers, so that depending on the services present either only one or both layers can be used in the forwarding rules for forwarding the packets.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the person's computer, partly on the person's computer, as a stand-alone software package, partly on the person's computer and partly on a remote computer, or entirely on the remote computer or server. In the latter scenario, the remote computer may be connected to the person's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1A is a schematic illustration of a 5G network architecture according to the prior art;
FIG. 1B is a schematic illustration of a 5G Core network (5GC) according to the prior art;
FIG. 1C is a schematic illustration of a PDU session establishment request in a 5G network according to the prior art;
FIG. 2A is a schematic illustration of a local network comprising a 5G Residential Gateway providing wireless coverage for a plurality of UEs connected to a 5GC via either wireline or wireless connections according to an embodiment of the invention;
FIG. 2B is a schematic illustration of a NERG deployment comprising an on-premises Bridged Residential Gateway (BRG) and a virtual Gateway (vG) deployed in a telecommunications network;
FIG. 3A is a schematic illustration of a telecommunications network comprising a session management system, a user plane system and a user device according to an embodiment of the invention;
FIG. 3B is a schematic illustration of a message for a PDU session establishment request according to an embodiment of the invention;
FIG. 3C is a schematic illustration of a user plane system according to an embodiment of the invention;
FIG. 3D is a schematic illustration or a protocol data unit, PDU, processed by a user plane system;
FIG. 4A is a schematic illustration of a telecommunications network comprising a session management system, a user plane system and a user device according to another embodiment of the invention;
FIG. 4B is a schematic diagram of some steps of deploying forwarding rules in the telecommunications network of FIG. 4A.
FIG. 4C is a schematic illustration of a user plane architecture and protocol stack for the dual-layer PDU session built on top of a wireless wireline convergence stacks from 3GPP TS 23.316;
FIG. 5A is a schematic illustration of integrated dual-layer policy control;
FIG. 5B is a schematic illustration of a telecommunications network with several user plane entities with different layer structures provided with different forwarding rules; and
FIG. 6 depicts a processing system according to an embodiment for a processing device or a server system.

### DETAILED DESCRIPTION OF THE DRAWINGS

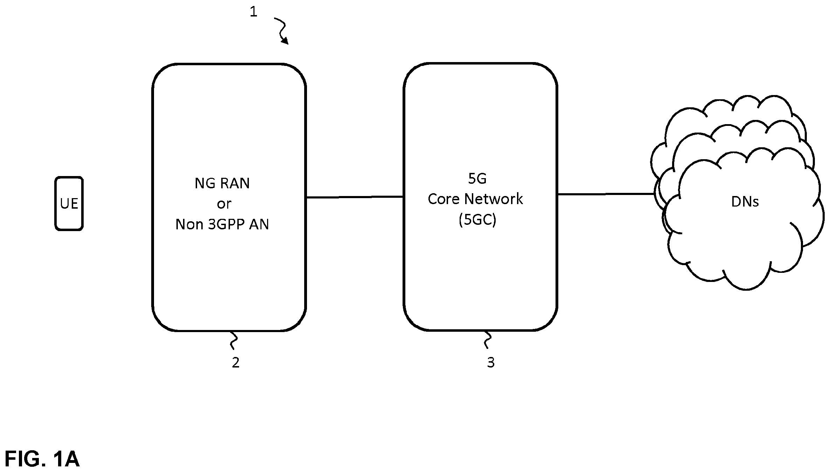

FIG. 1A is a schematic illustration of a 5G network architecture 1 according to the prior art. The 5G network is composed of a 5G access network 2 and a 5G core network (5GC) 3. The access network is made up of a new-generation radio access network (NG-RAN) which uses the 5G new radio interface (NR). The NG-RAN comprises 5G base stations, referred to as gNB's (not shown) which are connected to the 5GC and to each other. The access network 2 may comprise a non-3GPP access network (e.g. WiFI, xDSL, etc) connecting to the 5GC. The different network entities are connected by an underlying IP (or other transport technology) transport network. The 5G network architecture is connected to a plurality of data networks DN. Data networks can be the internet, an operator specific network, a dedicated network, etc.

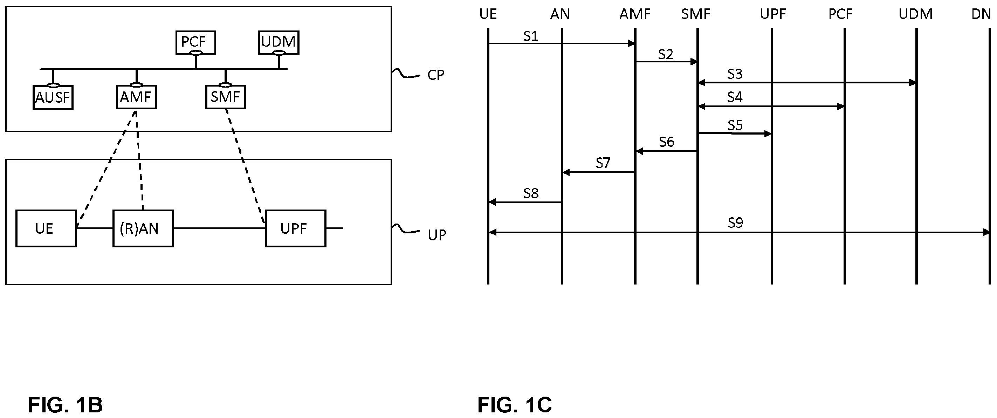

FIG. 1B shows a 5GC in a service-based architecture of a 5GC in combination with a user device UE and (R)AN. The 5GC comprises many systems that are defined in terms of network functions (NF) that provide services as sets of interactions between two or more network functions. The upper part of FIG. 1B shows a set of network functions that form the 5G control plane CP. Amongst others, the control plane comprises an access and mobility management function (AMF) that handles most signalling coming from and going to the UE. The AMF also interacts with other functions in the control plane. The AMF does not handle session management but forwards session-related messages to and from a system performing a session management function (SMF), hereinafter referred to as session management system. The SMF performs establishment, modification and release of PDU sessions. The control plane may also comprise a system performing a policy control function (PCF) that provides policy rules (QoS, filtering, charging) to other control plane functions, such as the SMF. The 5G Policy Architecture is defined in more detail in 3GPP TS 23.503. Further functions that are comprised in the control plane include the unified data management function (UDM) and the authentication server function (AUSF). The UDM is partly the equivalent of the home server system HSS in 3G and 4G networks and is a repository for UE-related information, such as credentials, identifiers, AMF details, and SMF PDU sessions. The AUSF supports authentication for 3GPP and non-3GPP access.

For the user plane UP, the lower part in FIG. 1B, the UE communicates via the access network 2 with a system performing a user plane function (UPF), hereinafter also referred to as the user plane system. Data is tunnelled between the access network and the UPF, sometimes referred to as the NG-U tunnel. The main task of the UPF is to process and forward user data. The UPF is controlled by the SMF and connects with external data networks DN.

The system performing the session management function SMF has the responsibility for setting up connectivity for the UE toward data networks as well as managing the user plane for that connectivity. In order to connect to a DN, the UE requests establishment of a protocol data unit (PDU) Session. The PDU is the basic end-user protocol type carried by the PDU session, e.g. IP packets or Ethernet frames. Each PDU session provides an association between the UE and a specific DN.

FIG. 1C provides a simplified PDU Session Establishment procedure as set out in more detail in 3GPP TS 23.502, v16.3.0.

In step S1, the UE transmits a PDU Session Establishment Request after the UE is registered with the 5GC sending a registration request to the AMF. The PDU Session Establishment Request is transmitted as a session management container in a NAS message to the AMF. The PDU Session Establishment Request contains the PDU session ID, the Requested PDU Session Type and, possibly, a data network name (DNN). The PDU Session ID is a unique identifier generated by the UE that is different for different PDU sessions. The Request Type indicates "Initial Request" if the PDU Session Establishment is a request to establish a new PDU session and indicates "Existing PDU Session" if the PDU Session Establishment Request refers to an existing PDU session between 3GPP access and non-3GPP access or to a PDU Session handover from an existing PDN connection in a 4G EPC. When the access network receives the PDU Session Establishment Request, the NAS message is encapsulated in an N2 message towards the AMF.

The AMF selects an SMF as described in TS 23.501 and may either use a DNN provided by the UE or select a (default) DNN using e.g. subscription information from the UDM. Based on the Request Type, the AMF determines whether the PDU Session Establishment request relates to an existing PDU session or to a new PDU session. In step S2, the AMF sends a message Nsmf_PDUSession_CreateSMContext Request to the SMF containing the PDU Session Establishment Request, DNN information, a PCF ID, etc. when the AMF is not already associated with an SMF. Else, the AMF sends_PDUSession_UpdateSMContextRequest to the SMF. If the Request Type indicates "Existing PDU Session", the SMF determines that the request is due to switching between 3GPP access and non-3GPP access. The SMF may then identify the existing PDU Session based on the PDU Session ID. In such a case, the SMF does not create a new SM context but instead updates the existing SM context. The request also contains a Requested PDU Session Type field which indicates what type the session should be, i.e. Ethernet, IPv4, IPv6 or IPv4v6.

The SMF may also interact with the UDM and PCF based on the data provided by the UE as can be observed from steps S3 and S4 to obtain subscription data and policy rules.

In step S5, the SMF interacts with the UPF to establish a session for the user plane. The SMF sends an N4 Session Establishment Request to the selected UPF and provides packet detection, QoS enforcement, forwarding and reporting rules to be installed on the UPF for this PDU Session if the Request Type is "Initial Request". Otherwise, the SMF sends an N4 Session Modification Request. The UPF acknowledges the respective request with an N4 Session Establishment/Modification Response. In this procedure, the SMF obtains tunnel information from the UPF.

In step S6, the SMF interacts with the AMF. Following the successful creation of a tunnel end point, the SMF sends Namf_Communication_N1N2MessageTransfer with tunnel information for N2 message and PDU session details in N1 Container and provides the representation of the SM context or updated SM context to the AMF.

In step S7, the AMF sends a N2 PDU Session Setup Request to the appropriate gNB of the access network AN along with N2 session management parameters received from the SMF as QFls, QoS Profile. The transmission from the AMF to the access network AN also includes the NAS message destined to the UE, including session parameters like QoS Rules and UE IP address.

The gNB establishes the tunnel based on the information received from the AMF and sets up a tunnel end point and forwards information to the UE for setting up a PDU session in step S8. The gNB also reports back to the AMF that subsequently informs the SMF about the successful setup of the tunnel.

After this step, the tunnel is established and the PDU session exists between the UE and the UPF allowing data transfer with the DN, indicated by step S9.

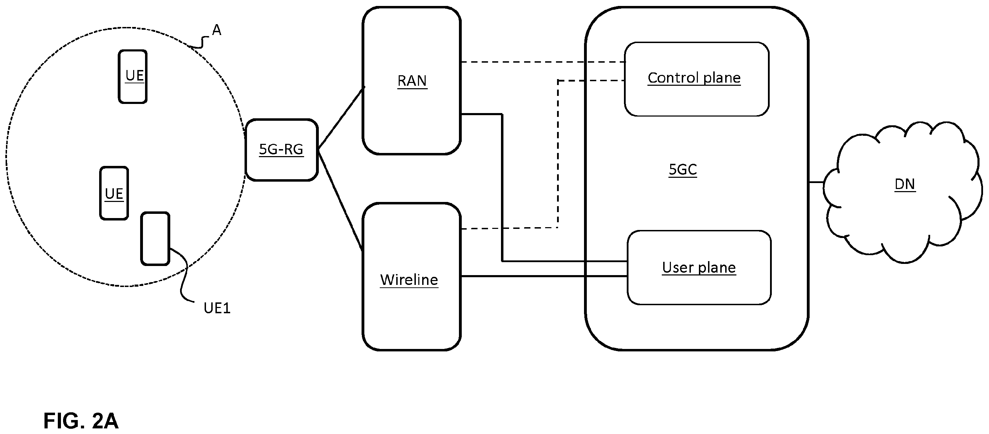

FIG. 2A is a schematic illustration of a use case with a local network comprising a gateway device, such as a 5G Residential Gateway (5G-RG), providing wireless coverage in an area A for a plurality of UEs connected to a 5GC via either a wireline access network or a wireless access network containing gNBs. The 5G-RG may connect to the 5GC as a UE in a manner corresponding to FIG. 1C interacting with functions in the control plane and user plane and forwards traffic to and from the UEs in the local network via the PDU session. The 5G-RG may assign addresses, e.g. IP addresses, to UEs in the local network. In this manner, the UEs behind the 5G-RG can make use of a single PDU session of the 5G-RG for a data network DN without being registered in the 5GC and using the IP address assigned by the telecommunications network to the 5G-RG. When the UE is associated with/connected to the 5G-RG, using Ethernet, Zigbee, WiFi or Bluetooth, for example, all types of traffic may be routed via the 5G-RG PDU Session towards the data network DN via a 5G-RAN or via wireline access and the 5GC.

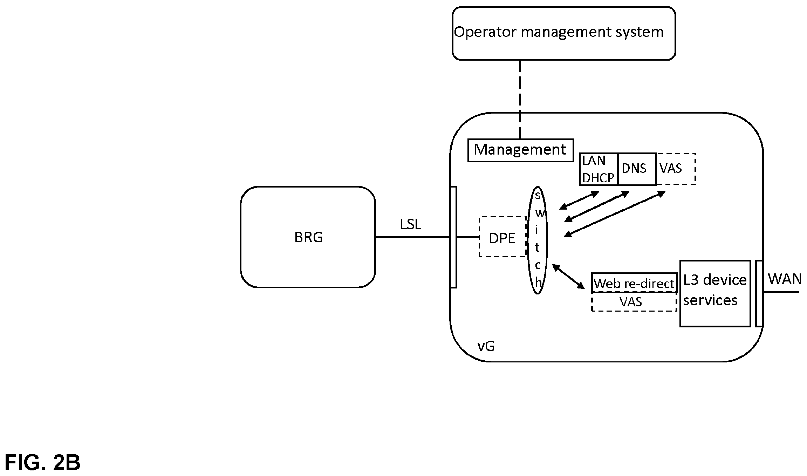

The Network Enhanced Residential Gateway (NERG) is an upgrade to the existing residential gateway, where a part of the functionality of the gateway is virtualized and placed in the telecommunications network as shown in FIG. 2B. With NERG, the on-premises user device consists of a Bridged Residential Gateway (BRG) connected over a logical subscriber link (LSL) to a virtual gateway vG deployed in the telecommunications network at a point-of-presence (PoP) operator premise. By deploying gateway functionality in the network, management, maintenance and troubleshooting operations are facilitated by the operator.

To that end, the virtual gateway vG has a management interface over which the operator can manage operations. The vG has device policy enforcement functionality (DPE) to enforce policies that may be configured from the operator. The vG also comprises switching functionality to switch traffic for a first communication protocol and a second communication protocol. In the embodiment shown in FIG. 2B, layer-2 services, such as DHCP and DNS are shown in combination with value-added services (e.g., for smart home control) as associated with a first communication protocol. The vG is connected to a wide area network WAN for layer-3 traffic. The vG may provide local layer-3 services, such as, for example, DDoS prevention and firewalling.

The NERG upgrade is not feasible with a 5G-RG user device that registers itself as a UE in the 5GC, because the BRG only has an Ethernet connection to the virtual gateway vG in the telecommunications network while the BRG should also allows internet access for UEs behind the BRG, so that at some point IP layer communication should be provided. Another problem is that when the virtual gateway vG is arranged more centrally in the telecommunications network, very large broadcast domains are created because of the Ethernet connection.

The present disclosure provides a solution for obtaining dual-layer connectivity for a user device to a telecommunications network. As a use case, the disclosure will focus on a 5G-RG user device establishing a dual-layer connection for a virtual residential gateway as discussed above. It should be appreciated, however, that the disclosure has a more general scope of obtaining a converged PDU session by a user device with a telecommunications network.

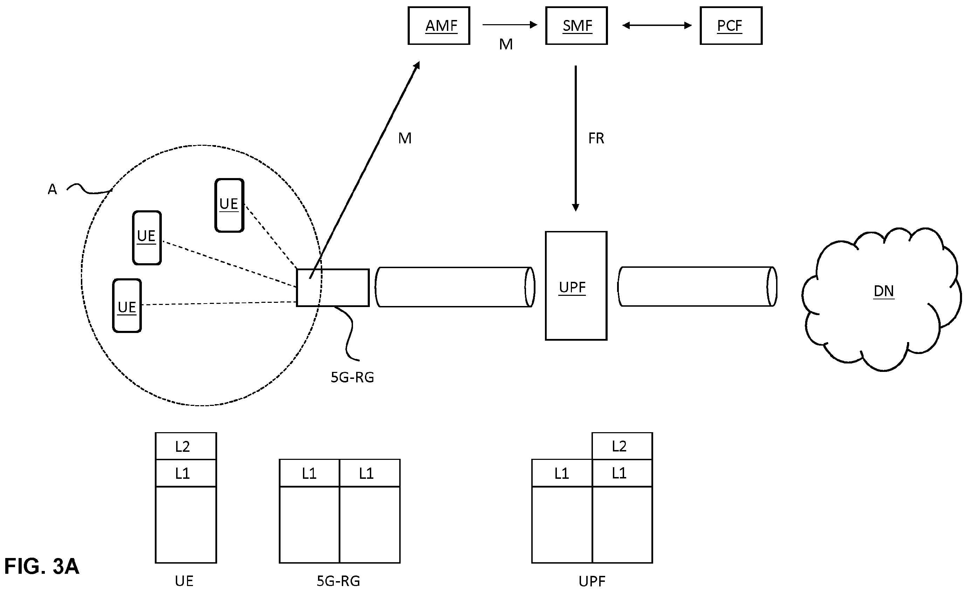

In FIG. 3A, a 5G-RG user device is shown providing a coverage area A for a plurality of UEs. The 5G-RG is configured to communicate with the 5GC comprising at least a session management system SMF and a user plane system UPF. The 5GC is connected to a data network DN.

The 5G-RG is configured to establish a protocol data unit, PDU, session with the telecommunications network comprising the session management system SMF and user plane system UPF for forwarding data for the PDU session after the 5G-RG has registered with the 5GC sending a registration request to the AMF.

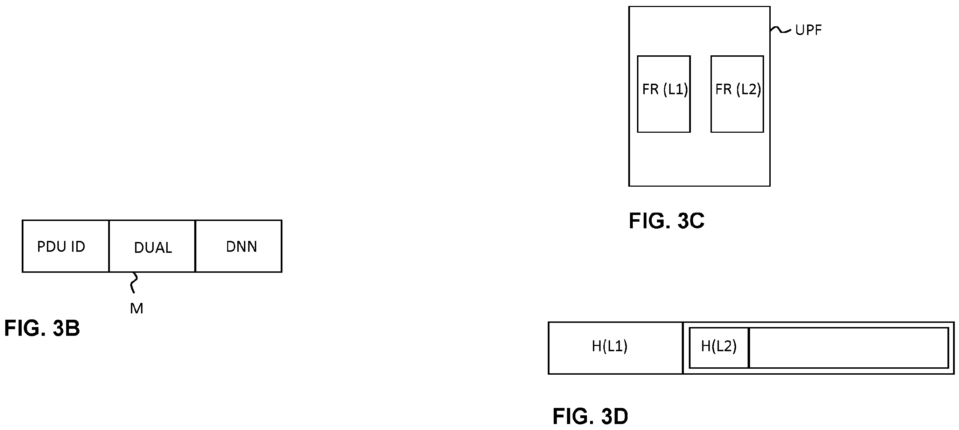

The PDU Session Establishment Request is transmitted as a session management container in a NAS message to the AMF. Some fields of the message M comprising a PDU session establishment request are indicated in FIG. 3B. The PDU session establishment request contains the PDU session ID, the Requested PDU Session Type and, possibly, a data network name, DNN. The PDU Session ID is a unique identifier generated by the 5G-RG that is different for different PDU sessions. The Requested PDU Session Type indicates a dual-layer session indication "dual", instead of "Ethernet" or "IP". It should be appreciated that other fields may be assigned, in addition or alternatively, to indicate to the network that dual-layer connectivity is requested. When the access network receives the PDU Session Establishment Request, the NAS message is encapsulated in an N2 message towards the AMF.

The session management system SMF receives the protocol data unit, PDU, session establishment request, from the 5G-RG and processes the dual-layer session type indication "dual". In one embodiment, the processing comprises initiating establishing the PDU session in response to receiving the dual-layer session type indication "dual". The establishment of the PDU session may comprise establishing the PDU session for the user plane system UPF by one or more first forwarding rules for a first communication layer to the user plane system and one or more second forwarding rules for a second communication layer to the user plane system. The forwarding rules, or information from which these rules may be derived, may be obtained from a policy control system, PCF of the telecommunications network or may have been configured already in the session management system SMF as predefined rules. The interaction between the session management system SMF and the user plane system UPF is shown in FIG. 3A by the arrow FR, for forwarding rules.

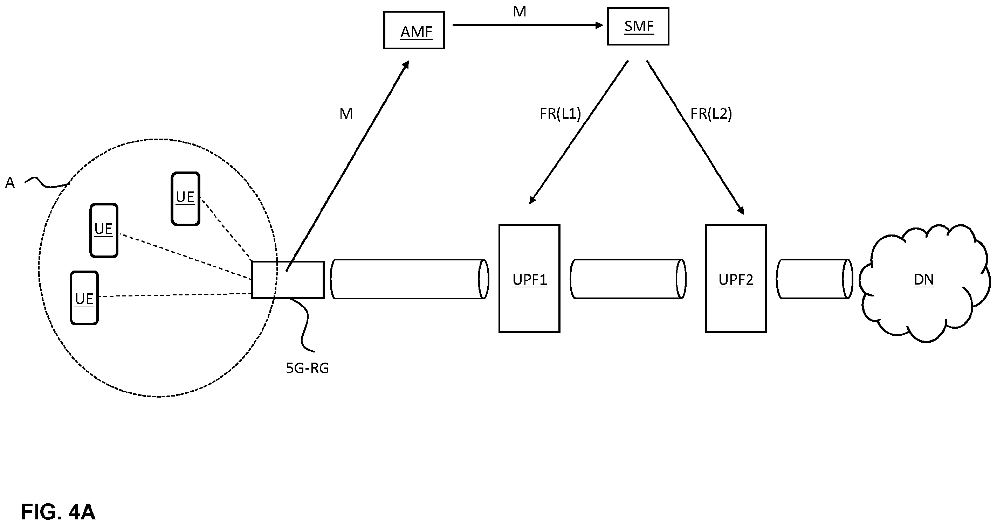

The user plane system UPF may be configured to receive the forwarding rules FR from the session management system as shown in FIG. 3A. The forwarding rules FR comprise at least one of one or more first forwarding rules FR1 for the first communication layer and one or more second forwarding rules FR2 for second communication layer as shown in FIG. 3C. The user plane system UPF is configured to apply the one or more first forwarding rules and one or more second forwarding rules for the PDU session requested by the 5G-RG. For example, FR1 does Ethernet-based forwarding and can split the traffic into "local" and "central" which is sent to another forwarding instance that does IP forwarding. Hence, instead of having two different UPFs as will be described below with reference to FIG. 4A, the session management system SMF sees two different forwarding instances FR1, FR2 within a single UPF entity and sends the appropriate forwarding rules to each.

FIG. 3A depicts a schematical layer stack with a first communication layer L1 for a first communication protocol, such as Ethernet, and a second communication layer L2 for a second communication protocol, such as IP. The first communication layer L1 exists below the second communication layer L2 in the protocol stack. Layers may exist below layer 1, as indicated in FIG. 3A, such as the physical layer commonly known in the OSI model. The UEs in the coverage area A of the 5G-RG may, e.g. be IP-communication capable devices, whereas the 5G-RG only has an Ethernet connection to the telecommunications network, as may be the case for the NERG deployment discussed with reference to FIG. 2C.

The PDU establishment request contained in the message M with the dual-layer type session indication "dual" obtained from the 5G-RG sets forwarding rules in the user plane system for both the first communication layer L1 and the second communication layer L2 as illustrated schematically with reference to FIG. 3C. The user plane system UPF has a protocol stack with a first communication layer L1 for the first communication protocol (e.g. Ethernet) and a second communication layer L2 for a second communication protocol (e.g. IP) as the forwarding rules FR establish a dual layer PDU session in the user plane system. The user plane system UPF receives, stores and/or processes forwarding rules for the first communication layer, FR(L1), and the second communication layer, FR(L2).

In particular, the forwarding rule FR(L1) may comprise at least one Ethernet-based forwarding rule and the forwarding rule FR(L2) may comprise at least one Internet Protocol, IP, based forwarding rule. Other rules may also be configured, as will be described in more detail below.

Forwarding rules may come in different forms.

FIG. 3D shows a PDU of the second communication protocol comprising a header H(L2) that is encapsulated in a PDU of the first communication protocol comprising a header H(L1).

In one embodiment, a forwarding rule may require analyzing a first header of a PDU of the first communication protocol and a second header of a PDU of second communication protocol by the user plane system UPF and, after analyzing the first and second headers, forwarding the PDU dependent on the result of the analysis. For example, the forwarding rule is based on one or more information elements from the first header H(L1) and one or more information elements from the second header H(L2), e.g. an Ethernet address and an IP address. Based on cross-layer forwarding rules regarding these addresses in the PDU, the user plane system UPF decides on the forwarding of the PDU.

In one further embodiment, a forwarding rule may comprise a first forwarding rule requiring analyzing a header H(L1) of a PDU of the first communication protocol and, after analyzing the header, forwarding the PDU, dependent on a first analyzing result, for execution of a second forwarding rule requiring analyzing a header H(I2) of a PDU of the second communication protocol and forwarding the PDU, dependent on a second analyzing result. For example, the forwarding rule may be a chained forwarding rule, that states that if the Ethernet type field of H(L1) indicates that the PDU contains an IP packet in conformance with a first forwarding rule, the PDU is exposed to a second forwarding rule that requires that IP header H(L2) indicates that the packet is IGMP with a specific IP address. If the second rule is also matched, the UPF forwards the PDU in accordance with the IP address.

In terms of the NERG deployment, the forwarding rules for the first communication layer FR(L1) may relate to local services, including the BroadBand forum, BBF, specified operator services for the vGW like LAN DHCP, DNS or other Value Added Services (VAS), wherein the forwarding rules of the second communication layer FR(L2) may relate to central services, including BBF vGW operator services like firewalls, Parental control, Web Redirect, or other Value Added Services (VAS).

FIG. 4A is a schematic illustration of another disclosed embodiment, wherein the user plane system comprises a plurality of user plane function entities, such as UPF1 and UPF2. The embodiment facilitates restriction of the broadcast domain. In one embodiment, a local UPF entity is provided containing, for example, forwarding rules associated with the first communication protocol stored and applied in the local UPF as a result of the PDU session establishment request containing the dual-layer session indication type indication received in the telecommunications network. The local UPF entity UPF1 can be located at a point of presence (PoP) of the operator close to the user device (e.g. the 5G-RG). In one example, UPF1 contains Ethernet-based forwarding rules, so that UPF1 acts like a switch. UPF1 may be selected as an entity which is geographically closest to the user device, such as the 5G-RG.

The UPF2 entity of the user plane system may be located more central in the telecommunications network and contain forwarding rules associated with the second communication protocol stored and applied in the central UPF as a result of the PDU session establishment request containing the dual-layer session indication type indication received in the telecommunications network. In one example, UPF2 contains IP-based forwarding rules, so that UPF2 may act as a gateway merging the fir st and second communication protocol sessions. For the NERG deployment, such a gateway is usually known as border network gateway (BNG) or broadband remote access server (BRAS).

The embodiment of FIG. 4A may be used to create an Ethernet domain extending from the home area network to the PoP, which allows an operator to place distributed value-added services per home on top of the services like address assignment. At the same time, the embodiment facilitates the access to more central services like internet access and convergence with a mobile network if the SMF also handles 3GPP or other mobile access types.

The presence of services in the PoP may be known to the SMF as part of its DNN configuration or as part of the policy rules that are received from the PCF (if policy control is applied).

In the NERG use-case, the BRG part of the NERG is a 5G-RG and the vG is split into a local part at UPF1 and a central part in UPF2. The PDU Session only branches out the necessary traffic (identified by the lower layer L1 forwarding rules) to and from the PoP, while the second leg (between UPF1 and UPF2) acts as a point-to-point link. The embodiment also facilitates a split in the offered services to local services and central services, thereby giving operators opportunities to create different deployments suited to different requirements. As an example, an operator may deploy any LAN related services associated with UPF1 while deploying WAN related services centrally in association with UPF2. Another type of division is heavy traffic services that can be distributed and cached in UPF1 (IPTV) vs low traffic services that can be centralized in UPF2.

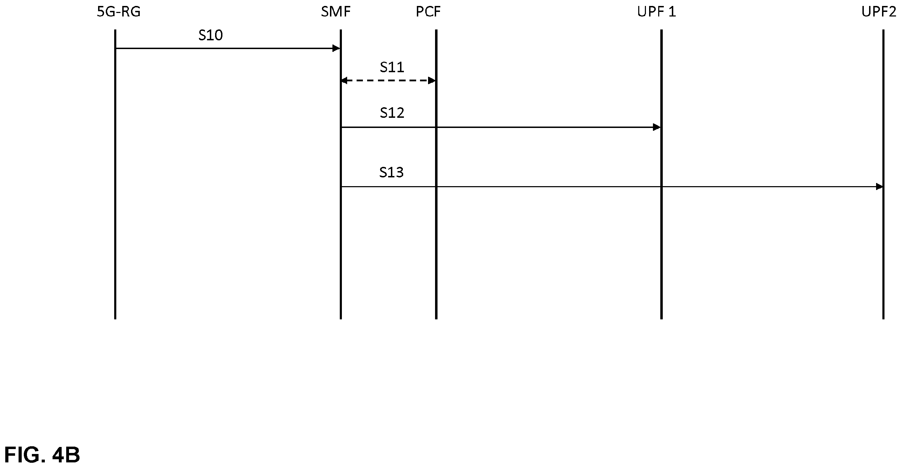

FIG. 4B illustrates some steps for deploying forwarding rules in UPF1 and UPF2 of FIG. 4A using a PDU session establishment request containing a dual-layer session type indication from a user device.

In step S10, the user device 5G-RG (the BRG in the NERG deployment) initiates transmission of a PDU session establishment request with the dual-layer session type indication, The request may be contained in a message M as indicated in FIG. 3B.

In step S11, if policy control is applied, the SMF that receives the dual-layer session type indication selects a policy control function PCF, sends a dual-layer PDU Session indication to the PCF and receives Policy and Charging Control (PCC) rules for the PDU Session (including any local and central services rules for UPF1 and UPF2). These rules may be standard and can contain QoS or forwarding control information that the SMF can process into forwarding rules, when receiving policy information from the PCF in step S11. The forwarding rules may be distinguished as L1-based (e.g. ETH based (for which the SMF derives local UPF1 rules)) and L2-based (e.g. IP based (for which the SMF derives the central UPF2 rules)). If dynamic policy control is not associated, the session management system SMF itself may be configured with those rules per DNN.

The session management system SMF may then perform UPF selection to select UPF1 and UPF2. Selection of the first entity UPF1 and the second entity UPF2 may be based on the basis of at least one of the following:
- geographic location of the first entity UPF1 and/or the second entity UPF2;
- type of services for the first entity UPF1 and/or the second entity UPF2;
- current load of the first entity UPF1 and/or the second entity UPF2;
- the forwarding layer capability of the first entity UPF1 and/or the second entity UPF2; and
- Data Network Access Identifier (DNAI).

In step S12, the session management system SMF initiates an N4 establishment request to the local UPF1 and includes e.g. derived Ethernet-forwarding rules from the (received or local) policy rules. The forwarding rules may e.g. have the form Dest MAC -> Interface ID which points to the local network in the PoP. The forwarding rules may be based on single, multiple or even broadcast destination MAC addresses (e.g. when there is an address assignment server in the PoP).

In step S13, the session management system SMF also initiates an N4 establishment request to the central UPF2 and includes e.g. derived IP forwarding rules from the (received or local) policy rules. The forwarding rules may have the form of regular IP routes. The session management system SMF may also indicate that the PDU Session and the external IP interface need to be in the same network instance, making the UPF2 act as a gateway router to the L2 network. In this central UPF2, the session management system SMF may also put at least one rule that removes the ETH header from the PDU and forwards the PDU on the exit N6 interface with its own ETH header depending on the access network technology (another MAC in case of ETH). The central UPF2 may connect the external N6 IP interface to the same network instance as an internal one which is in the same IP range/prefix as the home network.

Further steps in the PDU session establishment procedure may be performed, including steps as described with reference to FIG. 1C. It should be appreciated that steps S12 and S13 in FIG. 4B may be reversed in order.

The procedure of FIG. 4B facilitates for the NERG deployment the creation of a home network that extends to the central UPF2 but with ETH forwarding rules in the local UPF1 which may prevent the ETH multicast or broadcast messages going beyond UPF1.

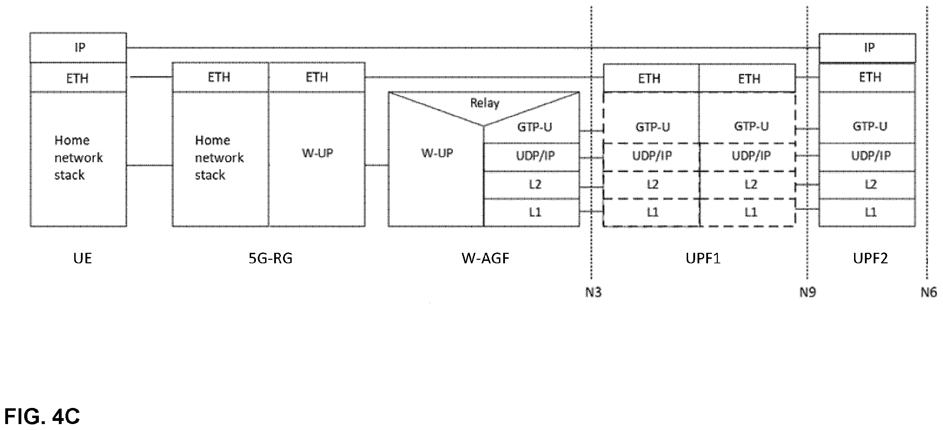

FIG. 4C is a schematic illustration of a user plane architecture and protocol stack for the dual-layer PDU session built on top of a wireless wireline convergence stack from 3GPP TS 23.316. The user plane architecture and protocol stack of this PDU Session is depicted in FIG. 4C for a case with a Non-3GPP AN. As can be noted from FIG. 4C, the Ethernet layer is terminated in UPF1 for the 5G-RG, whereas UPF1 is transparent to IP data traffic from the UEs which is terminated in UPF2.

It should be appreciated that for the user plane stack W-UP and GTP-U tunneling are not essential for the solution and depend on the operator network. Other, less (or equally) stacked solutions may be possible. For example, the 5G-NR or the Ethernet Passive Optical Network (EPON) user plane stack can be used instead of W-UP. In the core network on the N3 and N9 interfaces GTP-U can be replaced by VxLAN, GRE or any other tunneling solution. It is also possible to remove the transport layer stack - UDP/IP/L2/L1 and use an integrated transport solution with only VLANs, or EPON.

The main difference between the local UPF1 and the central UPF2 is the layer on which forwarding of packets is done. UPF1 performs forwarding based on (the lower layer) ETH header of packets and the central UPF2 on the (upper layer) IP header. This type of deployment is useful for increasing edge capabilities of a network operator. However, there may be different scales of edge capabilities, spanning from simple types where computing resources are low facilitating only small local services like DHCP, to complex types with lots of computing resources and even backbone type of services like Internet access.

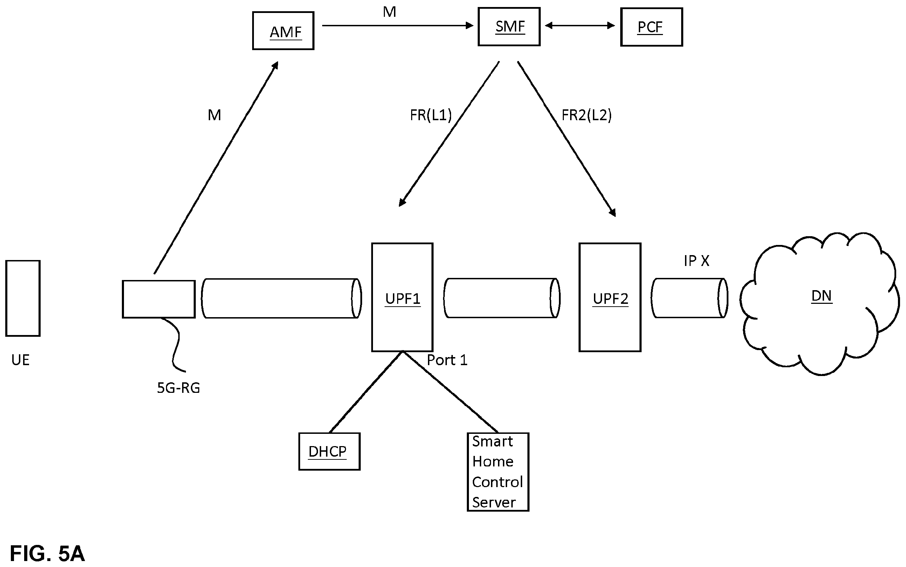

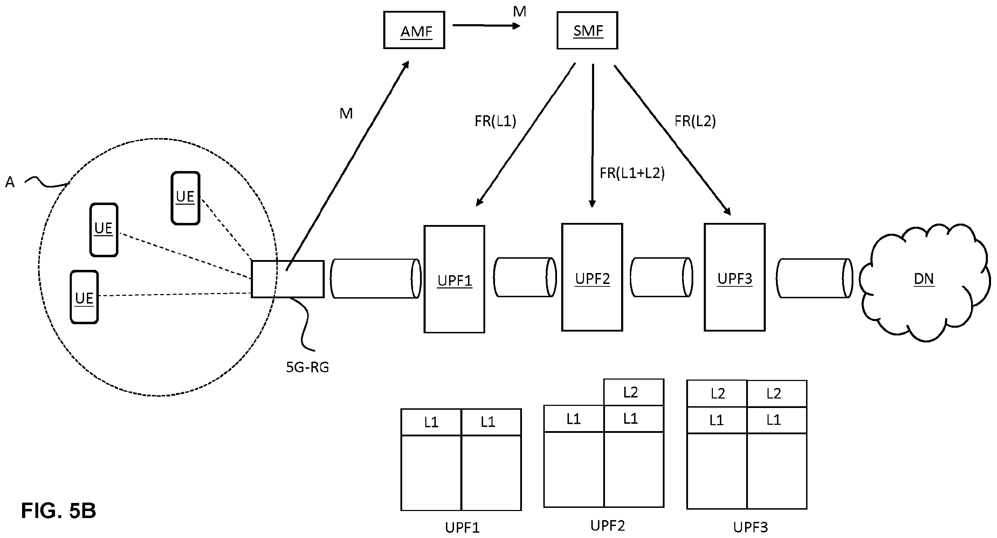

Further embodiments of the disclosure will be described with reference to FIGS. 5A and 5B. The telecommunications network of FIG. 5A is the same as in FIG. 4. In FIG.5A, two exemplary services (viz. address assignment via a DHCP server and smart home control via a smart home control server) are accessible via the 'local' UPF entity UPF1 of the user plane system.

In the NERG use case, the session management system SMF does not need to assign IP addresses since the 5G-RG is a BRG and doesn't have IP capabilities but acts as a switch. An operator deploying this NERG solution may desire to have an integrated address assignment (by configuration) because the address range in the local network is preferably the same as the address assigned for the DNN since the central UPF entity UPF2 may act as an IP gateway. The DHCP server connected to UPF1 assigns IP addresses to devices in the home network.

In one disclosed embodiment, this configuration for address assignment can be avoided. In this embodiment, the session management system SMF may comprise a rule for UPF1 for forwarding an address assignment request (e.g. a DHCP broadcast or a DHCP request) to the session management system SMF. Alternatively, the session management system SMF may comprise a forwarding rule for UPF1 for forwarding an address assignment request to the central UPF entity UPF2 and a forwarding rule for UPF2 for forwarding this address assignment request to the session management system SMF. When the session management system SMF adds these forwarding rules to UPF1 and UPF2, address assignment requests from the home network are sent to the session management system SMF instead of to the DHCP server. Whenever this happens, the session management system SMF can send a response to the address assignment request with an address from the address pool for the DNN.

In another disclosed embodiment, a Neighbor Discovery Protocol may be used for address assignment in IPv6 networks. Such address assignment requests may not be visible in the lower layer L1 because this protocol uses messages on higher layers, such as ICMP messages. One example employs a user plane system UPF capable of dual-layer forwarding (see e.g. FIG. 3C). In this case, the session management system SMF may, for example, add a forwarding rule in the user plane UPF so that ETH type IP and IP type ICMP Router Solicitation messages (or any other messages used for address assignment) are sent to the session management system SMF. The session management system may then respond with an ICMP Router Advertisement (or any other message used for address assignment). Alternatively, the lower layer forwarding UPF entity UPF1 may have a default rule which points to the UPF entity UPF2 and UPF2 as a higher layer forwarding UPF receives the Router Solicitation message and forwards it to the SMF which responds to the request using ICMP Router Advertisement again (or any other message used for address assignment).

As already mentioned above, the telecommunications network may also comprise a policy control system PCF storing information associated with forwarding rules for the first and second communication protocol to be added by the session management system SMF to the user plane system UPF upon receiving the dual-layer session type indication in the PDU session establishment request. Communications between the session management system SMF and the policy control system PCF were illustrated as an option in step S11 of FIG. 4B.

In this communication, the session management system SMF may initiate dynamic policy control if that is configured for that DNN. In this initiation message, the session management system SMF includes the PDU Session type "dual-layer" which indicates to the PCF that both L1 and L2 based policy control rules are requested by the session management system SMF. Such rules include Policy and Charging Control (PCC) rules for such a dual-layer session, indicating a traffic flow description and a description of how to handle the traffic in terms of, for example, Quality of Service, forwarding, charging, etc. For example, for L1 and L2, the traffic flow description contains traffic described in terms of Ethernet fields, like MAC addresses and VLANs or IP fields, like IP addresses and Type of Service. Based on the PCC rules received from the policy control system PCF, the session management system SMF will derive the forwarding and QoS rules necessary for each UPF entity send these, as illustrated in FIG. 5A as FR(L1) and FR(L2).

For the example depicted in FIG. 5A, the policy control system PCF has a policy about a Smart Home Control Server access and QoS policy for an uplink service with destination IP X. The policy control system PCF may send the PCC rules for the specified destination MAC address to the Smart Home Control Server which is connected on data network access identifier DNAI 1, and the specified source and destination IP address of the uplink service requiring, for example, QoS 5QI 40. The session management system SMF derives forwarding rules FR from this information for both layers L1, L2 because it may be aware (for example, by configuration or during SMF-UPF interface establishment) that DNAI 1 is on port 1 of the UPF1 and QoS with 5QI 40 characteristics (if that specific QoS flow was established earlier, if not it will create it). The session management system SMF may send the lower layer forwarding rules FR(L1) to the lower layer forwarding UPF1 together with default rules for address assignment (e.g. ETH DST ff:ff:ff:ff:ff:ff, and Enable ARP), as well as the higher layer forwarding rules FR(L2) to the anchor UPF (higher layer forwarding UPF2).

It is noted that first and second forwarding rules may be provided to entities UPF1, UPF2 and UPF3 of the user plane system dependent on the communication layers for these entities as shown in FIG. 5B.

The session management system SMF may be configured to provide, in use, the one or more first forwarding rules FR(L1) to an entity UPF1 only having the first communication layer L1;

The session management system SMF may be configured to provide, in use, both the one or more first forwarding rules and the one or more second forwarding rules FR(L1+L2) to an entity having at least both the first communication layer L1 and the second communication layer (L2).

The session management system SMF may be configured to provide, in use, the one or more second forwarding rules FR(L2) to an entity UPF3 having the second communication layer (L2). User plane entities UPF1, UPF2 and UPF3 may receive the forwarding rules FR and apply them to the data packets received from a preceding entity or from the user device.

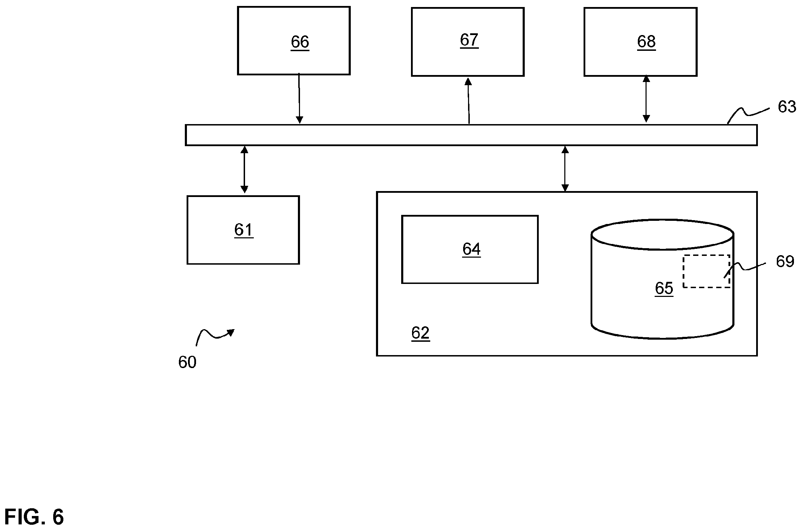

FIG. 6 depicts a block diagram illustrating an exemplary processing system according to a disclosed embodiment, e.g. a session management system, a user device, or a user plane system as disclosed herein. As shown in FIG. 6, the processing system 60 may include at least one processor 61 coupled to memory elements 62 through a system bus 63. As such, the processing system may store program code within memory elements 62. Further, the processor 61 may execute the program code accessed from the memory elements 62 via a system bus 63. In one aspect, the processing system may be implemented as a computer system that is suitable for storing and/or executing program code. It should be appreciated, however, that the processing system 60 may be implemented in the form of any system including a processor and a memory that is capable of performing the functions described within this specification.

The memory elements 62 may include one or more physical memory devices such as, for example, local memory 64 and one or more bulk storage devices 65. The local memory may refer to random access memory or other non-persistent memory device(s) generally used during actual execution of the program code. A bulk storage device may be implemented as a hard drive or other persistent data storage device. The processing system 60 may also include one or more cache memories (not shown) that provide temporary storage of at least some program code in order to reduce the number of times program code must be retrieved from the bulk storage device 65 during execution.

Input/output (I/O) devices depicted as an input device 66 and an output device 67 optionally can be coupled to the processing system. Examples of input devices may include, but are not limited to, a space access keyboard, a pointing device such as a mouse, or the like. Examples of output devices may include, but are not limited to, a monitor or a display, speakers, or the like. Input and/or output devices may be coupled to the processing system either directly or through intervening I/O controllers.

In an embodiment, the input and the output devices may be implemented as a combined input/output device (illustrated in FIG. 6 with a dashed line surrounding the input device 66 and the output device 67). An example of such a combined device is a touch sensitive display, also sometimes referred to as a "touch screen display" or simply "touch screen" that may be provided with the UE. In such an embodiment, input to the device may be provided by a movement of a physical object, such as e.g. a stylus or a finger of a person, on or near the touch screen display.

A network adapter 68 may also be coupled to the processing system to enable it to become coupled to other systems, computer systems, remote network devices, and/or remote storage devices through intervening private or public networks. The network adapter may comprise a data receiver for receiving data that is transmitted by said systems, devices and/or networks to the processing system 60, and a data transmitter for transmitting data from the processing system 60 to said systems, devices and/or networks. Modems, cable modems, and Ethernet cards are examples of different types of network adapter that may be used with the processing system 60.

As pictured in FIG. 6, the memory elements 62 may store an application 69. In various embodiments, the application 69 may be stored in the local memory 64, the one or more bulk storage devices 65, or apart from the local memory and the bulk storage devices. It should be appreciated that the processing system 60 may further execute an operating system (not shown in FIG. 6) that can facilitate execution of the application 69. The application 69, being implemented in the form of executable program code, can be executed by the processing system 60, e.g., by the processor 61. Responsive to executing the application, the processing system 60 may be configured to perform one or more operations or method steps described herein.

In one aspect of the present invention, one or more components of the UE, gateway device and/or system performing an SMF as disclosed herein may represent processing system 60 as described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 61 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope of the claims. The embodiments were chosen and described in order to best explain the principles and some practical applications of the present invention, and to enable others of ordinary skill in the art to understand the present invention for various embodiments with various modifications as are suited to the particular use contemplated.

## Claims

1. A session management system (SMF) for use in a telecommunications network, wherein the telecommunications network comprises a user plane system (UPF) for forwarding data for a PDU session, the user plane system having a protocol stack with a first communication layer (L1) for a first communication protocol and a second communication layer (L2) for a second communication protocol, wherein the first communication layer exists below the second communication layer in the protocol stack, wherein the user plane system comprises:
- a first entity (UPF1) configured for executing a first user plane function for PDU forwarding based on one or more PDU fields associated with the first communication protocol;
- a second entity (UPF2) configured for executing a second user plane function for PDU forwarding based on one or more PDU fields associated with the second communication protocol;
wherein the session management system is configured for:
- receiving a protocol data unit, PDU, session establishment request, from a user device (5G-RG, BRG), the PDU session establishment request containing a dual-layer session type indication;
- initiating establishing the PDU session in response to receiving the dual-layer session type indication, wherein establishing the PDU session for the user plane system comprises the session management system providing
one or more first forwarding rules for the first communication layer to the user plane system; and
one or more second forwarding rules for the second communication layer to the user plane system;
- providing the one or more first forwarding rules**,** FR1, to the first entity to apply the one or more first forwarding rules when performing the first user plane function; and
- providing the one or more second forwarding rules**,** FR2, to the second entity to apply the one or more second forwarding rules when performing the second user plane function.

2. The session management system according to claim 1, wherein the session management system is configured to select the first entity and the second entity on the basis of at least one of the following:
- geographic location of the first entity and/or the second entity;
- type of services for the first entity and/or the second entity;
- current load of the first entity and/or the second entity;
- the forwarding layer capability of the first entity and/or the second entity; and
- a Data Network Access Identifier**,** DNAI.

3. The session management system according to one or more of the preceding claims, wherein the one or more first forwarding rules include at least one of:
- at least one Ethernet-based forwarding rule;
- a rule for forwarding an address assignment request to the session management system or to the second entity;
and/or the one or more second forwarding rules include at least one of:
- at least one Internet Protocol (IP)-based forwarding rule;
- a rule for forwarding an address assignment request to the session management system.

4. The session management system according to one or more of the preceding claims, wherein the session management system is configured to send, in response to receiving the dual-layer session type indication, a request for policy control rules to a policy control system in the telecommunications network and to derive both the one or more first forwarding rules and one or more second forwarding rules for the user plane system from the received policy control rules.

5. The session management system according to claim 4, wherein the request to the policy control system contains the dual-layer session type indication.

6. The session management system according to any one or more of the preceding claims, wherein the session management system is configured for providing both the one or more first forwarding rules and the one or more second forwarding rules and/or a combination of the first forwarding rules and second forwarding rules to an entity having both the first communication layer and the second communication layer.

7. The session management system according to one or more of the preceding claims, wherein the one or more first forwarding rules and the one or more second forwarding rules comprise at least one of:
- a forwarding rule for the entity defined in claim 6 requiring analyzing a first header of a PDU of the first communication protocol and a second header of a PDU of second communication protocol and, after analyzing the first and second headers, forwarding the PDU dependent on an analyzing result;
- forwarding rules comprising a first forwarding rule requiring analyzing a header of a PDU of the first communication protocol and, after analyzing the header, forwarding the PDU, dependent on a first analyzing result, for execution of a second forwarding rule requiring analyzing a header of a PDU of the second communication protocol and forwarding the PDU, dependent on a second analyzing result.

8. A user plane system (UPF) for use in a telecommunications network for forwarding data for a protocol data unit, PDU, session having a protocol stack with a first communication layer (L1) for a first communication protocol and a second communication layer (L2) for a second communication protocol, wherein the first communication layer exists below the second communication layer in the protocol stack and wherein the user plane system is configured to receive from a session management system (SMF):
one or more first forwarding rules**,** FR1, for the first communication layer; and
one or more second forwarding rules**,** FR2, for second communication layer,
wherein the user plane system is configured to apply the one or more first forwarding rules and one or more second forwarding rules for the PDU session,
wherein the user plane system comprises:
- a first entity (UPF1) configured for executing a first user plane function for PDU forwarding based on one or more PDU fields associated with the first communication protocol;
- a second entity (UPF2) configured for executing a second user plane function for PDU forwarding based on one or more PDU fields associated with the second communication protocol;
wherein the first entity is configured to receive and apply the one or more first forwarding rules when executing the first user plane function and the second entity is configured to receive and apply the one or more second forwarding rules when executing the second user plane function for the PDU session.

9. The user plane system according to claim 8, wherein the first communication protocol is Ethernet and the second communication protocol is Internet Protocol, IP,

10. The user plane system according to claim 8 or 9, wherein at least one of the following applies:
- the first entity in the telecommunications network is configured to provide access to services reachable using the first communication protocol for the user device and/or the second entity in the telecommunications network is configured to provide access to services accessible using the second communication protocol for the user device;
- the first entity is located geographically closer to the user device than the second entity.

11. The user plane system according to one or more of the preceding claims 8-10, wherein the one or more first forwarding rules include at least one of:
- at least one Ethernet-based forwarding rule; and
- a rule for forwarding an address assignment request to the session management system or to the second entity; and/or
the one or more second forwarding rules include at least one of:
- at least one Internet Protocol (IP)-based forwarding rule; and
- a rule for forwarding an address assignment request to the session management system.

12. The user plane system according to one or more of claims 8-11, further configured to apply the first forwarding rules and the second forwarding rules based on:
- forwarding rules comprising a first forwarding rule requiring analyzing a header of a PDU of the first communication protocol and, after analyzing the header, forwarding the PDU, dependent on a first analyzing result, for execution of a second forwarding rule requiring analyzing a header of a PDU of the second communication protocol and forwarding the PDU, dependent on a second analyzing result.

13. A user device (5G-RG, BRG) configured to establish a protocol data unit, PDU, session with a telecommunications network comprising a session management system (SMF) and a user plane system (UPF) for forwarding data for the PDU session, the user plane system having a protocol stack with a first communication layer (L1) for a first communication protocol and a second communication layer (L2) for a second communication protocol, wherein the first communication layer exists below the second communication layer in the protocol stack, wherein the user device is configured to transmit a PDU session establishment request containing a dual-layer session type indication to the session management system to trigger the session management system to establish a dual layer PDU session in the user plane system, wherein the user plane system comprises:
- a first entity (UPF1) configured for receiving first forwarding rules, FR1, for first communication layer and for executing a first user plane function for PDU forwarding based on one or more PDU fields associated with the first communication protocol;
- a second entity (UPF2) configured for receiving second forwarding rules, FR2, for second communication layer and for executing a second user plane function for PDU forwarding based on one or more PDU fields associated with the second communication protocol;
wherein the first entity is configured to receive and apply the one or more first forwarding rules when executing the first user plane function and the second entity is configured to receive and apply the one or more second forwarding rules when executing the second user plane function for the PDU session.

14. The user device according to claim 13, wherein the first communication protocol is Ethernet and the second communication protocol is Internet Protocol, IP.

15. The user device according to claim 13 or 14, wherein the user device has a protocol stack up to the first communication layer for communicating with the user plane system.

16. The user device according to claim 15, wherein the user device is a bridged residential gateway configured to communicate with a virtual gateway, wherein the virtual gateway is a executable in the user plane system.

## Patentansprüche

1. Sitzungsverwaltungssystem (SMF) zur Verwendung in einem Telekommunikationsnetzwerk, wobei das Telekommunikationsnetzwerk ein Benutzerebenensystem (UPF) zum Weiterleiten von Daten für eine PDU-Sitzung umfasst, wobei das Benutzerebenensystem einen Protokollstapel mit einer ersten Kommunikationsschicht (L1) für ein erstes Kommunikationsprotokoll und einer zweiten Kommunikationsschicht (L2) für ein zweites Kommunikationsprotokoll aufweist, wobei sich die erste Kommunikationsschicht unterhalb der zweiten Kommunikationsschicht im Protokollstapel befindet, wobei das Benutzerebenensystem umfasst:
- eine erste Einheit (UPF1), die dafür konfiguriert ist, eine erste Benutzerebenenfunktion für die PDU-Weiterleitung basierend auf einem oder mehreren PDU-Feldern, die mit dem ersten Kommunikationsprotokoll assoziiert sind, auszuführen;
- eine zweite Einheit (UPF2), die dafür konfiguriert ist, eine zweite Benutzerebenenfunktion für die PDU-Weiterleitung basierend auf einem oder mehreren PDU-Feldern, die mit dem zweiten Kommunikationsprotokoll assoziiert sind, auszuführen;
wobei das Sitzungsverwaltungssystem dafür konfiguriert ist:
- eine PDU-Sitzungseinrichtungsanfrage von einem Benutzergerät (5G-RG, BRG) zu empfangen, wobei die PDU-Sitzungseinrichtungsanfrage eine Dual-Layer-Sitzungstypanzeige enthält;
- das Einrichten der PDU-Sitzung als Reaktion auf das Empfangen der Dual-Layer-Sitzungstypanzeige zu initiieren, wobei das Einrichten der PDU-Sitzung für das Benutzerebenensystem das Bereitstellen von einer oder mehrerer erster Weiterleitungsregeln für die erste Kommunikationsschicht an das Benutzerebenensystem; und einer oder mehrerer zweiter Weiterleitungsregeln für die zweite Kommunikationsschicht an das Benutzerebenensystem umfasst;
- das Bereitstellen der einen oder mehrerer erster Weiterleitungsregeln, FR1, an die erste Einheit zur Anwendung der einen oder mehrerer erster Weiterleitungsregeln bei der Ausführung der ersten Benutzerebenenfunktion; und
- das Bereitstellen der einen oder mehrerer zweiter Weiterleitungsregeln, FR2, an die zweite Einheit zur Anwendung der einen oder mehrerer zweiter Weiterleitungsregeln bei der Ausführung der zweiten Benutzerebenenfunktion.

2. Sitzungsverwaltungssystem nach Anspruch 1, wobei das Sitzungsverwaltungssystem konfiguriert ist, die erste Einheit und die zweite Einheit auf Basis von zumindest einem der folgenden Merkmale auszuwählen:
- geografische Lage der ersten und/oder zweiten Einheit;
- Art der Dienste für die erste und/oder zweite Einheit;
- aktuelle Auslastung der ersten und/oder zweiten Einheit;
- Weiterleitungsschichtfähigkeit der ersten und/oder zweiten Einheit; und
- Data Network Access Identifier, DNAI.

3. Sitzungsverwaltungssystem nach einem oder mehreren der vorhergehenden Ansprüche, wobei die eine oder mehrere erste Weiterleitungsregeln zumindest eines von Folgendem umfassen:
- mindestens eine Ethernet-basierte Weiterleitungsregel;
- eine Regel zum Weiterleiten einer Adresszuweisungsanfrage an das Sitzungsverwaltungssystem oder an die zweite Einheit;
und/oder die eine oder mehrere zweite Weiterleitungsregeln umfassen zumindest eines von:
- mindestens eine IP-basierte Weiterleitungsregel;
- eine Regel zum Weiterleiten einer Adresszuweisungsanfrage an das Sitzungsverwaltungssystem.

4. Sitzungsverwaltungssystem nach einem oder mehreren der vorhergehenden Ansprüche, wobei das Sitzungsverwaltungssystem dafür konfiguriert ist, als Antwort auf das Empfangen der Dual-Layer-Sitzungstypanzeige eine Anfrage für Richtliniensteuerungsregeln an ein Richtliniensteuerungssystem im Telekommunikationsnetzwerk zu senden und sowohl die eine oder mehrere erste Weiterleitungsregeln als auch die eine oder mehrere zweite Weiterleitungsregeln für das Benutzerebenensystem aus den empfangenen Richtliniensteuerungsregeln abzuleiten.

5. Sitzungsverwaltungssystem nach Anspruch 4, wobei die Anfrage an das Richtliniensteuerungssystem die Dual-Layer-Sitzungstypanzeige enthält.

6. Sitzungsverwaltungssystem nach einem oder mehreren der vorhergehenden Ansprüche, wobei das Sitzungsverwaltungssystem dafür konfiguriert ist, sowohl die eine oder mehrere erste Weiterleitungsregeln als auch die eine oder mehrere zweite Weiterleitungsregeln und/oder eine Kombination aus den ersten und zweiten Weiterleitungsregeln an eine Einheit bereitzustellen, die sowohl die erste Kommunikationsschicht als auch die zweite Kommunikationsschicht aufweist.

7. Sitzungsverwaltungssystem nach einem oder mehreren der vorhergehenden Ansprüche, wobei die eine oder mehrere erste Weiterleitungsregeln und die eine oder mehrere zweite Weiterleitungsregeln zumindest eines von Folgendem umfassen:
- eine Weiterleitungsregel für die in Anspruch 6 definierte Einheit, die das Analysieren eines ersten Headers einer PDU des ersten Kommunikationsprotokolls und eines zweiten Headers einer PDU des zweiten Kommunikationsprotokolls verlangt und, nach dem Analysieren der Header, die Weiterleitung der PDU abhängig vom Analyseergebnis;
- Weiterleitungsregeln, die eine erste Weiterleitungsregel umfassen, welche das Analysieren eines Headers einer PDU des ersten Kommunikationsprotokolls verlangt und, nach dem Analysieren, die Weiterleitung der PDU abhängig von einem ersten Analyseergebnis zur Ausführung einer zweiten Weiterleitungsregel verlangt, welche das Analysieren eines Headers einer PDU des zweiten Kommunikationsprotokolls verlangt und die Weiterleitung der PDU abhängig von einem zweiten Analyseergebnis.

8. Benutzerebenensystem (UPF) zur Verwendung in einem Telekommunikationsnetzwerk zum Weiterleiten von Daten für eine PDU-Sitzung mit einem Protokollstapel mit einer ersten Kommunikationsschicht (L1) für ein erstes Kommunikationsprotokoll und einer zweiten Kommunikationsschicht (L2) für ein zweites Kommunikationsprotokoll, wobei sich die erste Kommunikationsschicht unterhalb der zweiten Kommunikationsschicht im Protokollstapel befindet, wobei das Benutzerebenensystem dafür konfiguriert ist, von einem Sitzungsverwaltungssystem (SMF) zu empfangen:
- eine oder mehrere erste Weiterleitungsregeln; FR1, für die erste Kommunikationsschicht; und
- eine oder mehrere zweite Weiterleitungsregeln, FR2, für die zweite Kommunikationsschicht,
wobei das Benutzerebenensystem dafür konfiguriert ist, die eine oder mehrere ersten und zweiten Weiterleitungsregeln für die PDU-Sitzung anzuwenden,
wobei das Benutzerebenensystem umfasst:
- eine erste Einheit (UPF1), konfiguriert zur Ausführung einer ersten Benutzerebenenfunktion für die PDU-Weiterleitung basierend auf einem oder mehreren PDU-Feldern, die mit dem ersten Kommunikationsprotokoll assoziiert sind;
- eine zweite Einheit (UPF2), konfiguriert zur Ausführung einer zweiten Benutzerebenenfunktion für die PDU-Weiterleitung basierend auf einem oder mehreren PDU-Feldern, die mit dem zweiten Kommunikationsprotokoll assoziiert sind;
wobei die erste Einheit konfiguriert ist, die eine oder mehrere ersten Weiterleitungsregeln zu empfangen und anzuwenden bei Ausführung der ersten Benutzerebenenfunktion, und die zweite Einheit konfiguriert ist, die eine oder mehrere zweiten Weiterleitungsregeln zu empfangen und anzuwenden bei Ausführung der zweiten Benutzerebenenfunktion für die PDU-Sitzung.

9. Benutzerebenensystem nach Anspruch 8, wobei das erste Kommunikationsprotokoll Ethernet ist und das zweite Kommunikationsprotokoll Internet Protocol, IP, ist.

10. Benutzerebenensystem nach Anspruch 8 oder 9, wobei mindestens eines der folgenden zutrifft:
- die erste Einheit im Telekommunikationsnetzwerk ist konfiguriert, dem Benutzergerät Zugriff auf Dienste zu ermöglichen, die über das erste Kommunikationsprotokoll erreichbar sind, und/oder die zweite Einheit ist konfiguriert, Zugriff auf Dienste zu ermöglichen, die über das zweite Kommunikationsprotokoll erreichbar sind;
- die erste Einheit befindet sich geografisch näher am Benutzergerät als die zweite Einheit.

11. Benutzerebenensystem nach einem oder mehreren der Ansprüche 8-10, wobei die eine oder mehrere erste Weiterleitungsregeln zumindest eines umfassen:
- mindestens eine Ethernet-basierte Weiterleitungsregel; und
- eine Regel zum Weiterleiten einer Adresszuweisungsanfrage an das Sitzungsverwaltungssystem oder an die zweite Einheit;
und/oder die eine oder mehrere zweite Weiterleitungsregeln umfassen zumindest eines von:
- mindestens eine Internet-Protokoll (IP)-basierte Weiterleitungsregel; und
- eine Regel zum Weiterleiten einer Adresszuweisungsanfrage an das Sitzungsverwaltungssystem.

12. Benutzerebenensystem nach einem oder mehreren der Ansprüche 8-11, ferner konfiguriert zur Anwendung der ersten und zweiten Weiterleitungsregeln basierend auf:
- Weiterleitungsregeln, die eine erste Weiterleitungsregel umfassen, welche das Analysieren eines Headers einer PDU des ersten Kommunikationsprotokolls verlangt und, nach dem Analysieren, die Weiterleitung der PDU abhängig von einem ersten Analyseergebnis zur Ausführung einer zweiten Weiterleitungsregel verlangt, welche das Analysieren eines Headers einer PDU des zweiten Kommunikationsprotokolls verlangt und die Weiterleitung der PDU abhängig von einem zweiten Analyseergebnis.

13. Benutzergerät (5G-RG, BRG), konfiguriert zur Herstellung einer PDU-Sitzung mit einem Telekommunikationsnetzwerk umfassend ein Sitzungsverwaltungssystem (SMF) und ein Benutzerebenensystem (UPF) zur Weiterleitung von Daten für die PDU-Sitzung, wobei das Benutzerebenensystem einen Protokollstapel mit einer ersten Kommunikationsschicht (L1) für ein erstes Kommunikationsprotokoll und einer zweiten Kommunikationsschicht (L2) für ein zweites Kommunikationsprotokoll aufweist, wobei die erste Kommunikationsschicht unterhalb der zweiten im Stapel liegt, wobei das Benutzergerät konfiguriert ist, eine PDU-Sitzungseinrichtungsanfrage, die eine Dual-Layer-Sitzungstypanzeige enthält, an das Sitzungsverwaltungssystem zu übertragen, um das Sitzungsverwaltungssystem zur Einrichtung einer Dual-Layer-PDU-Sitzung im Benutzerebenensystem zu veranlassen,
wobei das Benutzerebenensystem umfasst:
- eine erste Einheit (UPF1), konfiguriert zum Empfangen erster Weiterleitungsregeln, FR1, für die erste Kommunikationsschicht und zum Ausführen einer ersten Benutzerebenenfunktion für die PDU-Weiterleitung basierend auf einem oder mehreren PDU-Feldern, die mit dem ersten Kommunikationsprotokoll assoziiert sind;
- eine zweite Einheit (UPF2), konfiguriert zum Empfangen zweiter Weiterleitungsregeln, FR2, für die zweite Kommunikationsschicht und zum Ausführen einer zweiten Benutzerebenenfunktion für die PDU-Weiterleitung basierend auf einem oder mehreren PDU-Feldern, die mit dem zweiten Kommunikationsprotokoll assoziiert sind;
wobei die erste Einheit konfiguriert ist, die eine oder mehrere erste Weiterleitungsregeln bei der Ausführung der ersten Benutzerebenenfunktion zu empfangen und anzuwenden, und die zweite Einheit konfiguriert ist, die eine oder mehrere zweite Weiterleitungsregeln bei der Ausführung der zweiten Benutzerebenenfunktion für die PDU-Sitzung zu empfangen und anzuwenden.

14. Benutzergerät nach Anspruch 13, wobei das erste Kommunikationsprotokoll Ethernet ist und das zweite Kommunikationsprotokoll Internet Protocol, IP, ist.

15. Benutzergerät nach Anspruch 13 oder 14, wobei das Benutzergerät einen Protokollstapel bis zur ersten Kommunikationsschicht für die Kommunikation mit dem Benutzerebenensystem aufweist.

16. Benutzergerät nach Anspruch 15, wobei das Benutzergerät ein gebrücktes Residential Gateway ist, das dafür konfiguriert ist, mit einem virtuellen Gateway zu kommunizieren, wobei das virtuelle Gateway eine im Benutzerebenensystem ausführbare Einheit ist.

## Revendications

1. Système de gestion de session (SMF) pour l'utilisation dans un réseau de télécommunications, dans lequel le réseau de télécommunications comprend un système de plan utilisateur (UPF) pour le transfert de données pour une session PDU, le système de plan utilisateur ayant une pile de protocoles avec une première couche de communication (L1) pour un premier protocole de communication et une seconde couche de communication (L2) pour un second protocole de communication, dans lequel la première couche de communication existe en dessous de la seconde couche de communication dans la pile de protocoles, dans lequel le système de plan utilisateur comprend :
- une première entité (UPF1) configurée pour exécuter une première fonction de plan utilisateur pour le transfert de PDU sur la base d'un ou plusieurs champs PDU associés au premier protocole de communication ;
- une seconde entité (UPF2) configurée pour exécuter une seconde fonction de plan utilisateur pour le transfert de PDU sur la base d'un ou plusieurs champs PDU associés au second protocole de communication ;
dans lequel le système de gestion de session est configuré pour :
- la réception d'une demande d'établissement de session d'unité de données de protocole, PDU, en provenance d'un dispositif utilisateur (5G-RG, BRG), la demande d'établissement de session PDU contenant une indication de type de session à double couche ;
- l'initiation de l'établissement de la session PDU en réponse à la réception de l'indication de type de session à double couche, dans lequel l'établissement de la session PDU pour le système de plan utilisateur comprend le système de gestion de session fournissant
une ou plusieurs premières règles de transfert pour la première couche de communication vers le système de plan utilisateur ; et
une ou plusieurs secondes règles de transfert pour la seconde couche de communication vers le système de plan utilisateur ;
- la fourniture des une ou plusieurs premières règles de transfert, FR1, à la première entité pour appliquer les une ou
plusieurs règles de premier transfert lors de l'exécution de la première fonction de plan utilisateur ; et
- la fourniture des une ou plusieurs secondes règles de transfert, FR2, à la seconde entité pour appliquer les une ou plusieurs secondes règles de transfert lors de l'exécution de la seconde fonction de plan utilisateur.

2. Système de gestion de session selon la revendication 1, dans lequel le système de gestion de session est configuré pour sélectionner la première entité et la seconde entité sur la base d'au moins l'un des éléments suivants :
- un emplacement géographique de la première entité et/ou de la seconde entité ;
- un type de services pour la première entité et/ou la seconde entité ;
- une charge actuelle de la première entité et/ou de la seconde entité ;
- la capacité de couche de transfert de la première entité et/ou de la seconde entité ; et
- un identifiant d'accès au réseau de données, DNAI.

3. Système de gestion de session selon une ou plusieurs des revendications précédentes, dans lequel les une ou plusieurs premières règles de transfert incluent au moins l'une parmi :
- au moins une règle de transfert basée sur Ethernet ;
- une règle de transfert d'une demande d'attribution d'adresse vers le système de gestion de session ou vers la seconde entité ;
et/ou les une ou plusieurs secondes règles de transfert comportent au moins l'une parmi :
- au moins une règle de transfert basée sur le protocole Internet (IP) ;
- une règle de transfert d'une demande d'attribution d'adresse vers le système de gestion de session.

4. Système de gestion de session selon une ou plusieurs des revendications précédentes, dans lequel le système de gestion de session est configuré pour envoyer, en réponse à la réception de l'indication de type de session à double couche, une demande de règles de contrôle de politique à un système de contrôle de politique dans le réseau de télécommunications et pour dériver à la fois les une ou plusieurs premières règles de transfert et une ou plusieurs secondes règles de transfert pour le système de plan utilisateur à partir des règles de contrôle de politique reçues.

5. Système de gestion de session selon la revendication **4,** dans lequel la demande au système de contrôle de politique contient l'indication de type de session à double couche.

6. Système de gestion de session selon une ou plusieurs des revendications précédentes, dans lequel le système de gestion de session est configuré pour fournir à la fois les une ou plusieurs premières règles de transfert et les une ou plusieurs secondes règles de transfert et/ou une combinaison des premières règles de transfert et des secondes règles de transfert à une entité ayant à la fois la première couche de communication et la seconde couche de communication.

7. Système de gestion de session selon une ou plusieurs des revendications précédentes, dans lequel les une ou plusieurs premières règles de transfert et les une ou plusieurs secondes règles de transfert comprennent au moins l'une parmi :
- une règle de transfert pour l'entité définie dans la revendication 6 requérant l'analyse d'un premier en-tête d'une PDU du premier protocole de communication et d'un second en-tête d'une PDU du second protocole de communication et, après l'analyse des premier et second en-têtes, le transfert de la PDU en fonction d'un résultat d'analyse ;
- des règles de transfert comprenant une première règle de transfert requérant l'analyse d'un en-tête d'une PDU du premier protocole de communication et, après l'analyse de l'en-tête, le transfert de la PDU, en fonction d'un premier résultat d'analyse, pour l'exécution d'une seconde règle de transfert requérant l'analyse d'un en-tête d'une PDU du second protocole de communication et le transfert de la PDU, en fonction d'un second résultat d'analyse.

8. Système de plan utilisateur (UPF) pour l'utilisation dans un réseau de télécommunications pour le transfert de données pour une
session d'unité de données de protocole, PDU, ayant une pile de protocoles avec une première couche de communication (L1) pour un premier protocole de communication et une seconde couche de communication (L2) pour un second protocole de communication, dans lequel la première couche de communication existe en dessous de la seconde couche de communication dans la pile de protocoles et dans lequel le système de plan utilisateur est configuré pour recevoir à partir d'un système de gestion de session (SMF) :
une ou plusieurs premières règles de transfert, FR1, pour la première couche de communication ; et
une ou plusieurs secondes règles de transfert, FR2, pour la seconde couche de communication,
dans lequel le système de plan utilisateur est configuré pour appliquer les une ou plusieurs premières règles de transfert et les une ou plusieurs secondes règles de transfert pour la session PDU, dans lequel le système de plan utilisateur comprend :
- une première entité (UPF1) configurée pour exécuter une première fonction de plan utilisateur pour le transfert de PDU sur la base d'un ou plusieurs champs PDU associés au premier protocole de communication ;
- une seconde entité (UPF2) configurée pour exécuter une seconde fonction de plan utilisateur pour le transfert de PDU sur la base d'un ou plusieurs champs PDU associés au second protocole de communication ;
dans lequel la première entité est configurée pour recevoir et appliquer les une ou plusieurs premières règles de transfert lors de l'exécution de la première fonction de plan utilisateur et la seconde entité est configurée pour recevoir et appliquer les une ou plusieurs secondes règles de transfert lors de l'exécution de la seconde fonction de plan utilisateur pour la session PDU.

9. Système de plan utilisateur selon la revendication 8, dans lequel le premier protocole de communication est Ethernet et le second protocole de communication est le protocole Internet, IP.

10. Système de plan utilisateur selon la revendication 8 ou 9, dans lequel au moins l'un des éléments suivants s'applique :
- la première entité dans le réseau de télécommunications est configurée pour fournir un accès à des services accessibles en utilisant le premier protocole de communication pour le dispositif utilisateur et/ou la seconde entité dans le réseau de télécommunications est configurée pour fournir un accès à des services accessibles en utilisant le second protocole de communication pour le dispositif utilisateur ;
- la première entité est située géographiquement plus près du dispositif utilisateur que la seconde entité.

11. Système de plan utilisateur selon une ou plusieurs des revendications précédentes 8 à 10, dans lequel les une ou plusieurs premières règles de transfert incluent au moins l'une parmi :
- au moins une règle de transfert basée sur Ethernet ; et
- une règle de transfert d'une demande d'attribution d'adresse vers le système de gestion de session ou vers la seconde entité ; et/ou
les une ou plusieurs secondes règles de transfert comportent au moins l'une parmi :
- au moins une règle de transfert basée sur le protocole Internet (IP) ; et
- une règle de transfert d'une demande d'attribution d'adresse vers le système de gestion de session.

12. Système de plan utilisateur selon l'une ou plusieurs des revendications 8 à 11, configuré en outre pour appliquer les premières règles de transfert et les secondes règles de transfert sur la base :
- des règles de transfert comprenant une première règle de transfert requérant l'analyse d'un en-tête d'une PDU du premier protocole de communication et, après l'analyse de l'en-tête, le transfert de la PDU, en fonction d'un premier résultat d'analyse, pour l'exécution d'une seconde règle de transfert requérant l'analyse d'un en-tête d'une PDU du second protocole de communication et le transfert de la PDU, en fonction d'un second résultat d'analyse.

13. Dispositif utilisateur (5G-RG, BRG) configuré pour établir une session d'unité de données de protocole, PDU, avec un réseau de télécommunications comprenant un système de gestion de session (SMF) et un système de plan utilisateur (UPF) pour le transfert de données pour la session PDU, le système de plan utilisateur ayant une pile de protocoles avec une première couche de communication (L1) pour un premier protocole de communication et une seconde couche de communication (L2) pour un second protocole de communication, dans lequel la première couche de communication existe en dessous de la seconde couche de communication dans la pile de protocole, dans lequel le dispositif utilisateur est configuré pour transmettre une demande d'établissement de session PDU contenant une indication de type de session à double couche au système de gestion de session pour déclencher le système de gestion de session pour établir une session PDU à double couche dans le système de plan utilisateur, dans lequel le système de plan utilisateur comprend :
- une première entité (UPF1) configurée pour recevoir des premières règles de transfert, FR1, pour une première couche de communication et pour exécuter une première fonction de plan utilisateur de transfert de PDU sur la base d'un ou plusieurs champs PDU associés au premier protocole de communication ;
- une seconde entité (UPF2) configurée pour recevoir de secondes règles de transfert, FR2, pour une seconde couche de communication et pour exécuter une seconde fonction de plan utilisateur de transfert de PDU sur la base d'un ou plusieurs champs PDU associés au second protocole de communication ;
dans lequel la première entité est configurée pour recevoir et appliquer les une ou plusieurs premières règles de transfert lors de l'exécution de la première fonction de plan utilisateur et la seconde entité est configurée pour recevoir et appliquer les une ou plusieurs secondes règles de transfert lors de l'exécution de la seconde fonction de plan utilisateur pour la session PDU.

14. Dispositif utilisateur selon la revendication 13, dans lequel le premier protocole de communication est Ethernet et le second protocole de communication est le protocole Internet, IP.

15. Dispositif utilisateur selon la revendication 13 ou 14, dans lequel le dispositif utilisateur présente une pile de protocoles jusqu'à la première couche de communication pour la communication avec le système de plan utilisateur.

16. Dispositif utilisateur selon la revendication 15, dans lequel le dispositif utilisateur est une passerelle résidentielle pontée configurée pour communiquer avec une passerelle virtuelle, dans lequel la passerelle virtuelle est un exécutable dans le système de plan utilisateur.
